# EUROPEAN PATENT SPECIFICATION

(11) **EP 0 358 914 B1**
(45) Date of publication and mention of the grant of the patent: **17.05.1995**
(21) Application number: 89114101.2
(22) Date of filing: 31.07.1989
(51) Int. Cl.: B29C 44/28, B29C 33/36, B29C 39/14, B29C 35/06, B29L 31/58

(54) **Continuous process and plant for manufacturing products of foam, comprising recesses, as mattresses, cushions and the like**
Kontinuierliches Verfahren und Vorrichtung zum Herstellen von Gegenständen aus Latexschaum mit Vertiefungen wie Matratzen, Polstern oder dergleichen
Procédé continu et dispositif pour la fabrication des produits en mousse de latex, comportant des creux comme matelas, coussins ou similaires

(30) Priority: 15.09.1988 IT 2195088
(43) Date of publication of application: 21.03.1990
(73) Proprietor: SAPSA BEDDING S.p.A., 20099 Sesto San Giovanni (MI) (IT)
(72) Inventor: Carotti, Luciano, I-24068 Seriate Bergamo (IT)
(74) Representative: Mazzarella, Vincenzo, Mavipat S.a.S. di Dr.Ing. Vincenzo Mazzarella & C.

(56) References cited:
- DE-B- 1 163 532
- FR-A- 1 157 717
- FR-A- 1 455 238
- US-A- 2 395 920
- US-A- 2 757 415
- US-A- 3 081 496

## Description

The present invention refers to a continuous process and a plant for manufacturing products of latex foam comprising recesses, as mattresses, cushions and the like.

As known, mold processes for manufacturing the cited products with recesses or cells are already existing.

For instance according to a known process the manufacture of a cellular mattress is effected by filling partially with latex foam a mold open into two halves and by letting the same foam when the mold is closed.

One or both two parts of the mold is provided with a plurality of conical or also cylindrical protuberances with conical ends, having the shape corresponding to the recesses or cells of the mattress.

The mold is adequately heated by introducing a liquid at a temperature pre-established for the thermal treatment of the article along an appropriate outer hollow space.
In a following step, the mold is open and the mattress is manually removed from the upper cover to the protuberances of which the mattress is anchored.

In the further steps the mattress is washed to remove the undesired substances in the finished product and then it is subject to the drying process.

There is another process in which a plurality of molds arranged on trolleys placed the one after the other is advanced through a tunnel vulcanizer heated with steam.

Unlike the preceding process, in this case the foam emulsified with air and devoid of swelling agents, is injected through particular holes provided on the cover up to the total filling of the whole volume of the mold leaving that fins of material overflow from proper openings of the mold to guarantee the appropriate dimension of the final product.

The further steps of the process, i.e. the opening of the molds and removal of the mattress, the washing and lastly the drying, are more or less the same as those of the preceding process.

As it is easily understandable, the cited processes require certain dimensions for each product, a mold with corresponding dimensions, therefore on varying for instance the width or height of the mattess, it is necessary to plan and realize a new mold in order to satisfy the various market demands.

Substantially, the mold processes for manufacturing and marketing products with recesses of same use but of different dimensions involve the drawback of a high cost for their realization.

Moreover the carrying into effect of the processes in question requires the manual intervention of one or more operators, as for instance the removal of the mattress from the protuberances of the open mold with the negative consequence of damaging the products owing to an excessive pull on a just shaped spongy material and the great inconvenience that the operator has to suffer in consequence of the strong emission of heat caused by the opening of the mold.

Unfortunately, the mold processes can also produce the risk of originating cellular products with some flaws as regards the wished product.

The cause of the potential product flaws is mainly connected to the vulcanizing step.

In fact to effect the vulcanizing step it is necessary to utilize heat steam under pressure made circulate all around the mold along appropriate hollow spaces with consequent transfer of heat from the steam to the metallic masses of the mold, i.e. to the walls and protuberances.

As the protuberances are numerous and are distributed in a regular manner in the foam mass, they transfer the vulcanization heat also inside the product.

Unfortunately the connections between protuberances and cover may originate an irregular cross-linking from one point to the other of the foam.

This negative circumstance is due to the fact that each protuberance is associated to the cover through a metal plate that closes completely the inside of the protuberance forming thus a closed cavity.

In some cases, the steam, owing to the high pressure, is able to penetrate between the plate and the lateral wall of the protuberance occupying thus at least partially a part of the cavity.

Subsequently, at the end of the cycle, the steam deposits as condensate and, as a consequence, the mold may have in the vulcanizing step either protuberances with empty cavities or protuberances whose cavities are filled in part with steam condensate.

As it is understandable, the different heating conditions to which a protuberance may be subject with respect to another one, can cause not uniform cross-linking operations of the foam originating a cellular product with characteristics different from one zone to the other.

In these circumstances, the product, for instance a mattress, may show during its use the drawback of a tearing in the zone less vulcanized in consequence of numerous folding cycles of said part.

Further a process is known for manufacturing a layer of spongy material of unlimited length based on the idea of continuously rotating a steel tape between rollers by moving forward the plane portion of the tape through a tunnel vulcanizer heated with high-pressure steam.

At the entry of the plane portion, the foam is injected and distributed in opposite senses to each other along the direction transversal to the advancing direction of the tape to form the desired thickness of the layer.

After the vulcanization the foam layer is cut according to the desired dimensions and then passes through the usual washing and drying steps.

This continuous process could overcome some of the drawbacks cited in the mold processes, i.e. either that of obtaining products with different width through suitable cutting operations in transversal sense to the layer, or of overcoming the numerous manual operations following the opening of the molds to remove the single products or of eliminating the inconvenience to the operators due to the emission of heat in the working ambient on opening the molds.

However it is to be stressed that such a process cannot be suitable for manufacturing products with recesses in which, as known, the thicknesses of the foam can reach 20 cm and over.

In fact the heat existing inside the steam tunnel can be used for vulcanizing products with a low thickness, namely of some centimeters, but it is not sufficient for vulcanizing products with greater thicknesses.

In substance, this process lacks the plurality of protuberances present in the molds and immersed in the surrounding foam mass to which said protuberances transfer vulcanization heat.

Therefore the process based on the use of a steel tape can be exploited only for manufacturing products without recess with a thickness to the maximum of 5 cm, for instance for plugs used for removing the make-up from the face and to be thrown away after use or to form the possible upper and lower layers in a spring mattress.

It is therefore understandable how this process excludes the possibility of manufacturing products with recesses of latex foam, among other things mattresses with recesses having thicknesses comprised between 14 and 18 cm, as for example mattresses of 14 cm of thickness with cells having a depth of 11 cm.

From document DE-B-1 163 532 it is known a conveyor belt designed for the continuos production of foamed sheets. The conveyor is formed by a plurality of plates provided with solid protuberances projecting upwardly from the plates in order to carry out recesses in the foamed material.
However, owing to the presence of the solid protuberances, it is not possible to inject steam inside them in order to obtain a uniform vulcanization of the same sheet.
From document US-A-2 757 415 it is known a method of molding foamed latex articles. This process comprises the steps of depositing foamed latex articles in a first continuous belt provided with holes on the bearing surface and of making recesses on the foamed material by means of a second continuous belt provided with protuberances entering through the holes of the first belt into the foamed article.
However, owing to the continuous surface of the second belt, there is the risk of tensional stresses on the belts during the arc of winding around the pulleys with consequent risk of altering the position of the protuberences and avoiding the entering of the same through the holes of the first belt. The same document cites fixed molds which may have a number of hollow protuberances into which the steam may pass. These fixed molds, as disclosed in detail in US-A-2767 433, may have a number of hollow protuberances with holes on their top for diffusing steam inside the foam mass.
However, the steam injected trough pipes inside the protuberances is slowed down and in some parts is stopped by the filters, by sudden reductions of cavity cross section and by the bendings of the pipes, which act as obstacles to the passage of the steam.
In addition to that, the filters get clogged by the impurities present in the steam, so that the clogged filters prevent the passage of steam.
In this way the quantity of vapor blocked inside the protuberances increases.
Accordingly, when the protuberances go out from the hot vulcanizer, at the end of of the curing step, the trapped steam condense because the temperature outside the vulcaniser is less than the temperature inside the vulcanizer.
During a new cycle of vulcanization, there are protuberances with condensate and other without condensate, so that there is a non uniform cross-linking of the foam mass.
This means that the mechanical properties of the final product are severely impaired.

Therefore the aim of the present invention is a process and plant for manufacturing products with recesses of foam of latex polymers devoid of all the previously cited drawbacks.

The object of the present invention is a process for continuously manufacturing products with recesses, of latex foam, in the form of a continuous layer of unlimited length divisible into single pieces of predetermined dimensions, said process comprising the steps of:
- rotating a laying surface, closed as a ring defined at any moment by a plane portion moving forward according to a first direction and a return portion moved in opposite sense to the first direction, and laying the latex foam at the beginning of the plane portion in transversal sense to the advancing direction up to constitute a layer of predetermined thickness (T), said laying surface being provided with a plurality of protuberances; - molding in the laying foam layer a plurality of recesses in correspondence of each protuberances, said recesses having a predetermined height smaller than the total thickness of the foam;
- introducing steam under pressure into a tunnel vulcanizer;
- vulcanizing the foam downstream of the beginning of the plane portion between a first and a second position, by supplying heat between said positions with steam under pressure;
said process being characterized by the following further steps:
a - rotating said laying surface having laying planes provided with said protuberances which are placed side by side in the plane portion and separated from one another according to a polygonal configuration between said plane and return portions so that said laying planes and said protuberances are insensitive to mechanical stresses during the arc of winding in said ring;
b - entering steam in said protuberances which are completely hollow inside and have bases which are completely open at a surface of said laying planes whereby the steam does not deposit as a condensate inside the protuberances at the and of the vulcanizing step.

As it is possible to note, the present process is based on the characteristic step of molding a plurality of recesses in the thickness of foam as it is laid and on the further characteristic step of introducing steam under pressure into the molding cavity during the vulcanizing step.

The result obtained by means of the cited characteristic steps permits of overcoming the drawbacks found in the vulcanizing step of the process accomplished with the mold open into two halves.

In fact the molding cavities corresponding to the cells are of the order of some thousands in a portion of the continuous layer corresponding to a mattress and may have heights equal to 70% and 80% of the total thickness of the finished product.

Consequently the heat supplied by the steam inside said cavities can spread directly in a uniform and complete manner over the whole portion of the cellular foam.

In practice by introducing steam inside all the molding cavities of the cells, the cross-linking of the cellular foam mass is complete and homogeneous and overcomes thus the drawbacks of the mold vulcanizers previously cited in which the presence or metallic protuberances hollow inside, but closed at the base, was able to originate, owing to possible steam infiltrations either with empty protuberances or protuberances with condensate, unacceptable products deriving from a not uniform cross-linking from one zone to the other.

Moreover the present process permits the formation of a continuous layer having recesses with possible variations of the thickness over the recesses.

In fact it is possible to conveniently act on the advancing speed of the surface on which the foam is laid and on the transversal injection speed of the foam up to obtain a product of predetermined height.

In the preferred embodiment the desired height is conveniently regulated by means of a leveling operation through a rigid surface arranged at a predetermined distance from the laying surface of the foam.

Moreover the formation of a continuous layer of foam with recesses permits favourably to make on the vulcanized layer a plurality of transversal cuts maintaining the contiguous cutting lines at the desired distance from one another so as to obtain for instance mattresses all with the same width or mattresses with a variable width each time depending on what required by the customer or by more customers.

Therefore the present process allows of overcoming all the drawbacks of the mold processes in which the fixed dimensions of the mold did not permit the formation of articles with recesses for the same use and of different dimensions.

A further object of the present invention is a plant for continuously manufacturing products with recesses of foam of latex polymers in the form of a layer of unlimited length divisible into single pieces of predetermined dimensions, said plant comprising:
- a conveyor element closed as a ring around at least two circular means rotating around parallel axes according to a configuration defined by a plane portion and a return portion radiused together by curvilinear portions, said conveyor element comprising a sporting surface provided with protuberances projecting outwardly and shaped in such a way as to correspond to the recesses of the product to be manufactured;
- a tunnel vulcanizer with high-pressure steam crossed by said plane portion between two extreme portions;
- a device for injecting latex foam;
- a station for the entry of the plane portion comprising a structure which is suspended with respect to the conveyor element to which driving means apt to move said injection device in opposites senses to each other in transversal direction are associated, said plant being characterized by the fact that:
   a) said laying surface comprises a plurality of laying plates each one provided with said protuberances which are placed side by side in the plane portion and separated from one another according to a polygonal configuration between said plane and return portions so that said laying planes and said protuberances are sensitive to mechanical stresses during the arc of winding in said ring;
   b - said protuberances are completely hollow inside and have bases which are completely opened at a surface of said plates at which said protuberences are connected to said plates whereby the steam does not deposit as a condensate inside the protuberances at the exit of the tunnel vulcanizer.

The present invention will be better understood by the following detailed description made by way of non-limiting example with reference to the attached sheets of drawing in which;
- FIGURE 1 -: is a lateral view of the plant with parts broken away in the middle;
- FIGURE 2 -: is a top partial view of figure 1 with parts broken away;
- FIGURE 3 -: is a cross section of the vulcanizer shown in figure 1;
- FIGURE 4 -: shows schematically two laying plates of the plant of figure 1 associated to a gearing chain;
- FIGURE 5 -: shows one of the lateral boundary walls of the laying plates;
- FIGURE 6 -: is a front view of a laying plate with the lateral boundary walls;
- FIGURE 7 -: shows the continuous layer formed by the plant of figure 1;
- FIGURE 8 -: shows a blade used to mold wavinesses on the layer of figure 7.

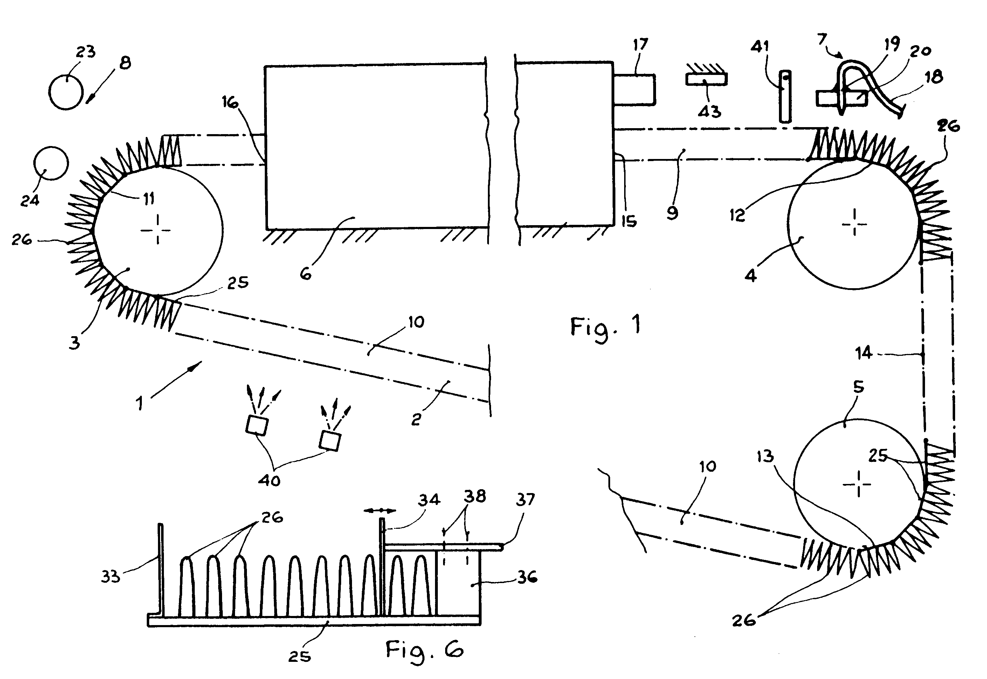

In figure 1 reference numeral 1 shows a plant for continuously manufacturing products of latex foam, having recesses or cells, for instance synthetic latex of butadiene styrene.

The plant 1 provides for manufacturing a continuous layer of unlimited length divisible into single pieces of predetermined dimensions; for instance the plant 1 is suitable for manufacturing mattresses, comprising cells open on the innermost surface.

With reference to figure 1 the plant 1 comprises a conveyor element 2 closed as a ring among rotating circular means 3, 4, 5, a tunnel vulcanizer 6 provided with steam under pressure, a device 7 for injecting foam, a mechanism 8 for automatically removing the continuous layer.

More specifically the configuration of the conveyor element 2 is defined in the upper part by a plane portion 9 and in the lower part by a return portion 10.

The two portions 9 and 10 are connected at the outermost end by a curvilinear portion 11 shaped as an arc of circle and at the other end by two curvilinear portions shaped as an arc of circle 12 and 13 joined together by a vertical rectilinear portion 14.

The tunnel vulcanizer 6 is crossed by the plane portion 9 of the conveyor element between two extreme positions 15 and 16.

Moreover, in proximity of the extreme position 15 of the vulcanizer above the plane portion, there is any whatsoever heating element 17.

The injection device 7, placed at the entry station of the plane portion 9, comprises substantially a flexible tubular duct 18 connected at one end to a pump (not shown) sucking into a tank containing the butadiene styrene latex foam.

The end 19 of the tubular duct is associated to a structure 20 which is suspended with respect to the conveyor element and is moved in opposite senses to each other in a direction transversal to the conveyor element through driving means of any type, for instance a trolley set in action by a chain control moved by a motor.

The mechanism 8 for automatically removing the continuous layer is formed by a pair of cylindrical rollers 23, 24 arranged opposite to each other and above the conveyor element in proximity of the final end of the plane portion.

The essential characteristics of the conveyor element are now described.

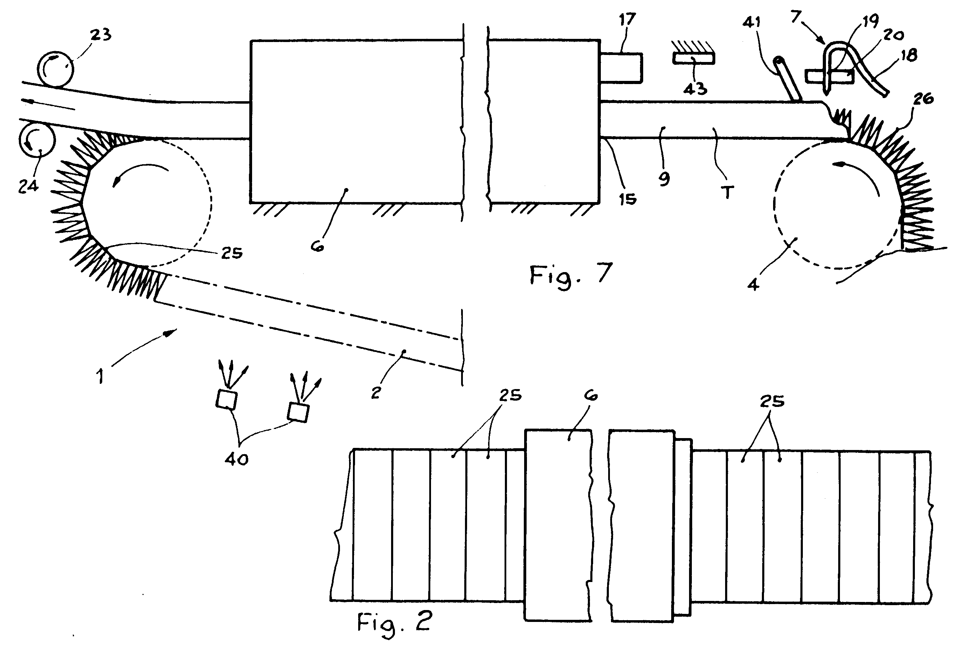

The supporting structure of the foam layer is formed by a plurality of plates 25 (figures 1 - 2 ) of aluminium and each plate connects through a soldering or screwing operation a plurality of conical protuberances 26 of aluminium projecting outwardly.

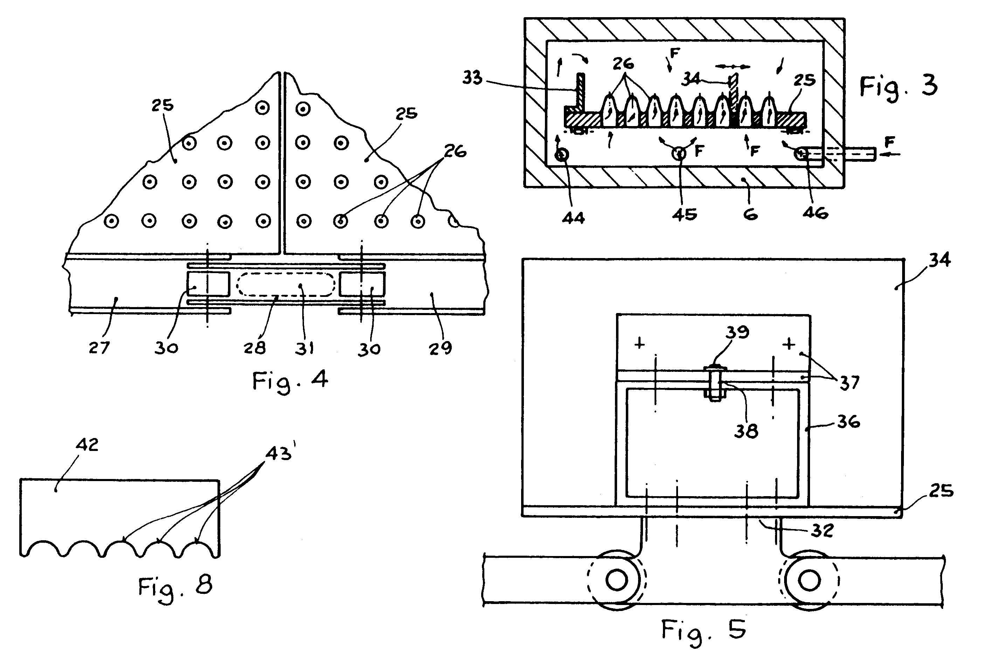

Inside, the protuberances are hollow and open at the base (figure 3) to permit the introduction of steam during the vulcanizing step.

The plates 25 are associated at the ends to two lateral chains engaging laterally with the respective gear wheels 3, 4, 5 (figure 1).

Each chain, of any known type, comprises in the schematic view made by way of example in figure 4, adjacent links 27, 28, 29 forming empty spaces and connected to one another by pins 30 apt to receive thrusts or to transmit the motion during the meshing step with the teeth 31 (represented with a dashed line) of a gear wheel.

As it is shown in figure 4, the ends of one same side of the plates 25 are made integral with the lateral chains in the zones 32 of a link (figure 5) so as to permit during the continuous movement of the conveyor element, the passage from a configuration in which the plates are all placed side by side along the plane portion 9 and return portion 10 to a configuration in which the plates are separated from one another according to polygonal profiles in the curvilinear portions 12 and 13 shaped as an arc of circle (figure 1).

Further, the plant is characterized by the fact of comprising means for the lateral boundary of the foam layer to obtain mattresses of the desired length.

Preferably said means comprise on each plate 25 rigid walls 33, 34 preferably of aluminium, opposite to each other and arranged perpendicularly to the surfaces of the plates (figure 6).

Also preferably one of the walls 34 is movable with respect to the other to pass from a predetermined length of a mattress to another one.

According to one of the possible embodiments (figure 7), in proximity of one end of each plate 25, there is a supporting block 36 with respect to which a L-shaped strap 37 or the like can slide in longitudinal sense to the plate, said strap being provided with a projecting mobile part 34 apt to be inserted between two contiguous rows of protuberances.

Both the block 36 and the strap 37 are provided with means for a mutual connection and for instance said means can comprise two rows of holes 38 for the mutual blocking through suitable pins 39.

The manufacturing of the continuous layer of cellular foam for obtaining the single mattresses takes place as follows.

The conveyor element in continuous rotation shows cyclically the various laying plates 25 (figure 1) at a spraying station 40 placed below the first part of the return portion.

In the spraying station a plurality of nozzles injects antiadhesive substances on the protuberances 26 so as to facilitate subsequently the removal of the continuous layer from the protuberances themselves (figure 7).

After having travelled over the return portion 10, the various plates 25 associated to the lateral chains and separated from one another along the arcs of winding around the gear wheels, reach gradually the entry station of the plane portion placed side by side below the device for injecting the foam.

At the entry station of the plane portion the mechanism for setting in action the laying device moves the end 19 of the tubular duct in transversal direction now in one sense now in opposite sense between the rigid walls 33, 34 (figure 6) of each plate 25.

The foam, already emulsified with air, to get to the wished viscosity, reaches the tubular duct through a pump sucking into a tank where the acqueous dispersion of natural or synthetic latex is mixed with the usual surface-active fillers having the task of avoiding the formation of agglomerates of particles before infection.

The laid foam covers the plates 25, the spaces between the protuberances 26 and the portion on the protuberances up to constitute a layer T (figure 7) of a given thickness levelled then at the wished height by a proper blade 41 maintained at a predetermined distance from the plates in motion.

The blade 41 may be mounted with the upper end oscillating around a horizontal axis.

In alternative, the cited blade 41 may be replaced by a blade 42 (figure 8) shaped in the lower part with a series of wavings 43' in order to constitute a plurality of longitudinal wavinesses on the outer surface of the layer.

Between the blade 41 and the entrance 15 of the tunnel, the foam layer is conveniently heated with emission of infrared rays through a device 43 in order to favour the freezing of the foam and a superficial hardening of the layer.

The freezing of the layer, as known, avoids the collapsing of the foam and the corresponding chemical reaction based on the use of a freezing agent, for instance the sodium fluosilicate already introduced in the starting compound, is favoured by the characteristic step of feeding heat with the emission of infrared rays.

In particular, and very advantageously, the superficial hardening carried out through the infrared rays protects the continuous foam layer from imprintings and the like that could be caused for any whatsoever reason by actions of the outer ambient toward the layer.

Moreover, according to one of the characteristics of the invention, the pre-arrangement at the entrance of the vulcanizer of the heating element 17 avoids favourably that the steam of the vulcanizer, escaping from the tunnel above and in opposite direction to the advancing direction of the conveyor element, may be transformed into condensate drops with the risk that falling downwardly these latter imprint the continuous foam layer in an unacceptable manner.

Following the freezing step, the foam layer passes through the tunnel remaining subjected to the action of the steam under pressure that escapes from appropriate injectors 44, 45 and 46 and goes towards the direction of the arrows shown in figure 3.

The steam under pressure striking the plates 25 at the bottom, penetrates through the openings obtained on the plates inside the various protuberances 26 that on their turn transfer directly heat to the mass of foam in which they are embedded.

On coming out of the vulcanizer the continuous layer passes through the rollers 23, 24 (figure 7) moved in opposite senses to each other at a peripheral speed equal to the advancing one of the plates 25 in order to maintain tractive forces of constant value useful for automatically removing the layer from the protuberances 26 without any risk of tearings.

The layer of foam already vulcanized and removed from the conveyor element is sent to a suitable chute and passes necessarily through the washing and drying steps followed then by the cutting step for obtaining the single mattresses.

As an alternative to the foregoing, the continuous layer could be cut immediately after vulcanization and then the various lengths could be sent one by one to the subsequent washing and drying steps.

The various mattresses are obtained by making cutting lines directed transversely to the length of the layer and maintaining between the contiguous cuts a distance equal to the width of the single mattress.

As regards the washing steps, they are substantially carried out according to the known way and are briefly summarized hereinafter.

According to a possible embodiment, the layer or the single mattresses are advanced into one or more water tanks through a plurality of pairs of rotating rollers arranged in opposite sense to one another and at a mutual distance lower than the thickness of the product.

Substantially, the subsequent passage of the product between opposite rollers and subsequent pairs of rollers determines an alternation of steps constituted by the wringing of the product and the water intake inside the foam with the consequent expelling of the not desired substances.

In particular during the washing operation, the surface-active fillers introduced in the starting compound are expelled.

The further drying operation is carried out by laying the layer or the single mattress on a conveyor belt made pass in suitable stoves.

As it appears from what described, the present plant permits to achieve the aimed purposes.

In fact, the plurality of plates 25 provided with protuberances 26 projecting outwardly and open at the base, permits a capillary and uniform vulcanization of the foam tanks to the passage of the steam inside the cavities of each protuberance.

Therefore, thanks to the cited characteristic the drawbacks that are met in the mold processes during the vulcanizing step, i.e. the possible stay of steam condensate inside the protuberances, are overcome.

Moreover the independence of each plate 25 with respect to the other ones constitutes in the present invention a characteristic of the plant.

In fact, each plate 25 is connected laterally to a link of a chain, therefore each plate follows the flexibility of the chains during the arc of winding on the gear wheels.

In practice, thanks to the cited characteristic, the plates 25 result to be placed side by side in the plane portion where the continuity of the conveying surface assures the regular laying of the foam and the plates themselves result to be separated from one another according to a polygonal configuration during the travel in the curvilinear portions around the wheels 3, 4 and 5.

Therefore the conveyor element is characterized by the fact of comprising laying planes independent of the bending effect around the pulleys, therefore laying planes insensitive to those mechanical stresses that would arise in a tape with a continuous surface of a given thickness during the arc of winding around the wheels of the driving device.

From the cited characteristic it derives that the various protuberances projecting from the plates are devoid of mechanical stresses too.

Consequently, being the position of the protuberances on the plates unchanged, the desired recessed geometry of the final product is guaranteed.

Therefore, it is easily understandable how the present plant permits to overcome the drawbacks of the known plants with a continuous steel tape and tunnel vulcanizer unsuitable for forming continuous layers of products with recesses of substantial thickness.

Moreover the preferred characteristic of the plant relating to the presence of walls 33 and 34 on each plate, one of which is movable with respect to the other, permits to vary as desired the width of the foam layer and therefore to vary the length of the single product after the transversal cut of the layer.

Therefore it is clear how the present plant can advantageously be used, without increases in cost, for the production of mattresses with recesses and the like for which frequent variations of size are required.

The further preferred characteristic of a blade 42 provided with a waving permits to produce, for instance mattresses having wavy surfaces by using a simple means and a just as simple continuous superficial operation of imprinting of the foam layer.

A further advantageous aspect of the invention is constituted by the fact of continuously removing the layer of foam already vulcanized through the rollers 23, 24 overcoming thus either the manual steps of removing the products with recesses from the molds or the unfavourable working conditions to which the operators are subject in consequence of the strong emission of heat on opening the molds.

## Claims

1. Process for manufacturing products with recesses, of latex foam, in the form of a continuous layer of unlimited length divisible into single pieces of predetermined dimensions, said process comprising the steps of:
- continuously rotating a laying surface (25), closed as a ring defined at any moment by a plane portion (9) moving forward according to a first direction and a return portion (10) moved in opposite sense to the first direction, and laying the latex foam at the beginning of the plane portion in transversal sense to the advancing direction up to constitute a layer of predetermined thickness (T), said laying surface being provided with a plurality of protuberances; - molding in the laying foam layer a plurality of recesses in correspondence of each protuberances, said recesses having a predetermined height smaller than the total thickness of the foam;
- introducing steam under pressure into a tunnel vulcanizer;
- vulcanizing (6) the foam downstream of the beginning of the plane portion between a first and a second position, by supplying heat between said positions with steam under pressure;
said process being characterized by the following further steps:
a - rotating said laying surface (25) having laying planes provided with said protuberances which are placed side by side in the plane portion and separated from one another according to a polygonal configuration between said plane and return portions so that said laying planes and said protuberances are insensitive to mechanical stresses during the arc of winding in said ring;
b - entering steam in said protuberances which are completely hollow inside and have bases which are completely open at a surface of said laying planes whereby the steam does not deposit as a condensate inside the protuberances at the end of the vulcanizing step.

2. Process as in claim 1, characterized by the fact of leveling the foam laid at the entry station maintaining at a predeterminated height from the laying surface a rigid surface (42) extending transversely to the continuous layer of foam moving towards the vulcanizing step.

3. Process as in claim 1 or 2 characterized by the fact of heating (17) the ambient lying over and near the first vulcanization position at a temperature corresponding to that for maintaining a steam state.

4. Process as in claim 1 or 2 or 3 characterized by the fact of hardening (43) the outer surface of the foam layer having forward between the entry station and the first vulcanization position by supplying heat above said layer.

5. Process as in claim 1, characterized by the fact of spraying (40) anti-adhesive substances against the laying surface along said return portion.

6. Process as in claim 1, characterized by the fact of exerting cutting forces transversal to the continuos vulcanized foam layer and of maintaining the adjacent cutting lines at a mutual distance corresponding to the predetermined width of a single product.

7. Process as in claim 1, characterized by the fact of delimiting the foam layer moving forward between two rigid surfaces (33, 34) opposite to each other, said surfaces extending perpendicularly to the laying surface and at a mutual distance corresponding to the predetermined length of the final product.

8. Process as in claim 7, characterized by the fact of varying the length value of the product by moving one of said rigid surfaces with respect to the other.

9. Process as in claim 1, characterized by the fact of exterding tractive forces of constant value on the opposite surfaces of the recessed foam layer above the plane portion of the laying surface.

10. Plant (1) for continuously manufacturing products with recesses of foam of latex polymers in the form of a layer of unlimited length divisible into single pieces of predetermined dimensions, said plant comprising:
- a conveyor element (2) closed as a ring around at least two circular means (3, 4, 5) rotating around parallel axes according to a configuration defined by a plane portion (9) and a return portion (10) radiused together by curvilinear portions (11, 12, 13), said conveyor element comprising a supporting surface provided with protuberances (26) projecting outwardly and shaped in such a way as to correspond to the recesses of the product to be manufactured;
- a tunnel vulcanizer (6) with high-pressure stem crossed by said plane portion between two extreme portions;
- a device (7) for injecting latex foam,
- a station for the entry of the plane portion (9) comprising a structure (20) which is suspended with respect to the conveyor element to which driving means apt to move said injection device in opposites senses to each other in transversal direction are associated, said plant being characterized by the fact that:
a) said laying surface comprises a plurality of plates (25), each one provided with said protuberances (26) which are placed side by side in the plane portion and separated from one another according to a polygonal configuration between said plane and retun portions so that said plates and said protuberances are insensitive to mechanical stresses during the arc of winding in said ring;
b - said protuberances are completely hollow inside and have bases which are completely opened at a surface of said plates at which said protuberances are connected to said plates whereby the steam does not deposit as a condensate inside the protuberances at the exit of the tunnel vulcanizer.

11. Plant as in claim 10, characterized by the fact that said means for transmitting the motion comprise two lateral chains engaging with gear wheels (3, 4, 5).

12. Plant as in claim 10, characterized by the fact that said plates and said protuberances are of aluminium.

13. Plant as in claim 10, characterized by the fact of comprising a leveling blade (41) arranged at a predetermined height from the plates downstream of the entry station.

14. Plant as in claim 10, characterized by the fact of comprising means for laterally delimiting the continuous layer of foam.

15. Plant as in claim 14, characterized by the face that said means comprise on each plate of the conveyor element rigid walls (33, 34) opposite to one another arranged perpendicularly to the surfaces of the plates.

16. Plant as in claim 10, characterized by the fact of comprising a blade (42) arranged at a predetermined height from the plates downstream of the entry station, said blade being provided at the lower end with a series of consecutive wavings (43').

17. Plant as in claim 10, characterized by the fact of comprising means for cutting the continuous cellular layer moved in transversal sense with respect to the advancing direction of the layer in a position immediately successive to the removal of the layer.

## Patentansprüche

1. Verfahren zur Herstellung von Aussparungen aufweisenden Produkten aus Latexschaum in Form einer kontinuierlichen Schicht unbegrenzter Länge, welche in einzelne Stücke mit vorher bestimmten Abmessungen teilbar ist, wobei das Verfahren die Schritte aufweist:
- kontinuierliches Umlaufenlassen einer Ablegefläche (25), die zu einem Ring geschlossen ist, welcher zu jedem Zeitpunkt von einem sich gemäß einer ersten Richtung vorwärts bewegenden ebenen Abschnitt (9) und einem in der zur ersten Richtung entgegengesetzten Richtung bewegten Rückführabschnitt (10) gebildet wird, und Ablegen des Latexschaums am Anfang des ebenen Abschnitts in einer Richtung quer zur Richtung der Vorwärtsbewegung, bis eine Schicht mit vorher bestimmter Dicke (T) gebildet ist, wobei die Ablegefläche mit einer Vielzahl von Vorsprüngen versehen ist;
- Ausformen einer Vielzahl von den jeweiligen Vorsprüngen entsprechenden Aussparungen in der sich absetzenden Schaumschicht, wobei die Aussparungen eine vorher bestimmte Höhe haben, die geringer ist als die Gesamtdicke des Schaumes;
- Zuführen von Dampf unter Druck in einen Tunnelvulkanisator;
- Vulkanisieren (6) des Schaumes stromab vom Anfang des ebenen Abschnitts zwischen einer ersten und einer zweiten Position durch Zuführen von Wärme mittels Dampf unter Druck zwischen den Positionen;
wobei das Verfahren durch folgende weitere Schritte gekennzeichnet ist:
a - Umlaufenlassen der Ablegefläche (25), die mit den Vorsprüngen versehene Ablegebereiche aufweist, welche in dem ebenen Abschnitt nebeneinander angeordnet und zwischen dem ebenen Abschnitt und dem Rückführabschnitt gemäß einer polygonalen Anordnung voneinander getrennt sind, so daß die Ablegebereiche und die VorSprünge gegenüber mechanischen Belastungen während des Bogendurchlaufs in dem Ring unempfindlich sind; und
b - Einführen von Dampf in die Vorsprünge, die innen völlig hohl sind und Basen haben, welche an einer Oberfläche der Ablegebereiche völlig offen sind, wodurch sich der Dampf am Ende des Vulkanisierschrittes nicht als Kondensat innerhalb der Vorsprünge absetzt.

2. Verfahren nach Anspruch 1, dadurch gekennzeichnet, daß der an der Eintrittsstation abgelegte Schaum unter Beibehaltung einer vorher bestimmten Höhe von der Ablegefläche aus nivelliert wird, wobei sich eine starre Fläche (42) quer zu der kontinuierlichen Schaumschicht erstreckt, die sich auf den Vulkanisierschritt zubewegt.

3. Verfahren nach Anspruch 1 oder 2, dadurch gekennzeichnet, daß die Umgebung über und in der Nähe der ersten Vulkanisierposition auf eine Temperatur erhitzt wird (17), die der für die Aufrechterhaltung eines Dampfzustandes entspricht.

4. Verfahren nach Anspruch 1 oder 2 oder 3, dadurch gekennzeichnet, daß die Außenfläche der Schaumschicht, die sich zwischen der Eintrittsstation und der ersten Vulkanisierposition vorwärtsbewegt, durch Zuführen von Wärme über der Schicht gehärtet wird (43).

5. Verfahren nach Anspruch 1, dadurch gekennzeichnet, daß entlang des Rückführabschnittes Antihaft-Substanzen auf die Ablegefläche gesprüht werden (40).

6. Verfahren nach Anspruch 1, dadurch gekennzeichnet, daß quer zu der kontinuierlichen vulkanisierten Schaumschicht Schneidkräfte ausgeübt werden und die benachbarten Schnittlinien in einem gegenseitigen Abstand gehalten werden, der der vorher bestimmten Breite eines einzelnen Produktes entspricht.

7. Verfahren nach Anspruch 1, dadurch gekennzeichnet, daß die sich vorwärtsbewegende Schaumschicht zwischen zwei einander gegenüberliegenden starren Flächen (33, 34) begrenzt wird, wobei sich die Flächen senkrecht zu der Ablegefläche und in einem gegenseitigen Abstand erstrecken, der der vorher bestimmten Länge des Endproduktes entspricht.

8. Verfahren nach Anspruch 7, dadurch gekennzeichnet, daß der Längenwert des Produktes variiert wird, indem eine der starren Flächen bezüglich der anderen bewegt wird.

9. Verfahren nach Anspruch 1, dadurch gekennzeichnet, daß auf die gegenüberliegenden Flächen der Schaumschicht mit Aussparungen über dem ebenen Abschnitt der Ablegefläche Zugkräfte mit konstantem Wert ausgeübt werden.

10. Anlage (1) zur kontinuierlichen Herstellung von Aussparungen aufweisenden Produkten aus Schaum oder Latexpolymeren in Form einer Schicht unbegrenzter Länge, welche in einzelne Stücke mit vorher bestimmten Abmessungen teilbar ist, wobei die Anlage
- ein Förderelement (2), das zu einem Ring um wenigstens zwei kreisförmige Einrichtungen (3, 4, 5) herum geschlossen ist, welche sich entsprechend einer von einem ebenen Abschnitt (9) und einem Rückführabschnitt (10) gebildeten und durch gekrümmte Abschnitte (11, 12, 13) zusammengeführten Anordnung um parallele Achsen drehen, wobei das Förderelement eine Auflagefläche aufweist, die mit Vorsprüngen (26) versehen ist, welche nach außen vorstehen und so geformt sind, daß sie den Aussparungen des herzustellenden Produktes entsprechen;
- einen Tunnelvulkanisator (6) mit Hochdruckdampf, welcher zwischen zwei Extremstellungen von dem ebenen Abschnitt durchquert wird;
- eine Vorrichtung (7) zum Einspritzen von Latexschaum; und
- eine Station für den Eintritt des ebenen Abschnitts (9) umfaßt, die einen bezüglich des Förderelements hängend angebrachten Aufbau (20) aufweist, dem Antriebseinrichtungen zugeordnet sind, die die Injektionsvorrichtung zueinander entgegengesetzt in Querrichtung bewegen können,
wobei die Anlage dadurch gekennzeichnet ist,
a) daß die Ablegefläche eine Vielzahl von jeweils mit Vorsprüngen (26) versehenen Platten (25) aufweist, welche in dem ebenen Abschnitt nebeneinander angeordnet und zwischen dem ebenen Abschnitt und dem Rückführabschnitt gemäß einer polygonalen Anordnung voneinander getrennt sind, so daß die Platten und die Vorsprünge gegenüber mechanischen Belastungen während des Bogendurchlaufs in dem Ring unempfindlich sind; und
b) daß die Vorsprünge innen völlig hohl sind und Basen haben, welche an einer Fläche der Platten, an der die Vorsprünge mit den Platten verbunden sind, völlig offen sind, wodurch sich der Dampf am Ausgang des Tunnelvulkanisators nicht als Kondensat innerhalb der Vorsprünge absetzt.

11. Anlage nach Anspruch 10, dadurch gekennzeichnet, daß die Einrichtungen zur Bewegungsübertragung zwei seitliche, mit Zahnrädern (3, 4, 5) in Eingriff stehende Ketten aufweisen.

12. Anlage nach Anspruch 10, dadurch gekennzeichnet, daß die Platten und die Vorsprünge aus Aluminium bestehen.

13. Anlage nach Anspruch 10, dadurch gekennzeichnet, daß stromab von der Eintrittsstation eine auf einer vorher bestimmten Höhe über den Platten angeordnete Nivellierrakel (41) vorgesehen ist.

14. Anlage nach Anspruch 10, dadurch gekennzeichnet, daß Einrichtungen zum seitlichen Begrenzen der kontinuierlichen Schaumschicht vorgesehen sind.

15. Anlage nach Anspruch 14, dadurch gekennzeichnet, daß die Einrichtungen auf jeder Platte des Förderelements einander gegenüberliegende starre Wände (33, 34) aufweisen, welche senkrecht zu den Flächen der Platten angeordnet sind.

16. Verfahren nach Anspruch 10, dadurch gekennzeichnet, daß stromab von der Eintrittsstation eine auf einer vorher bestimmten Höhe über den Platten angeordnete Rakel (42) vorgesehen ist, welche am unteren Ende mit einer Reihe von aufeinanderfolgenden Wellungen (43') versehen ist.

17. Anlage nach Anspruch 10, dadurch gekennzeichnet, daß Einrichtungen zum Schneiden der kontinuierlichen Zellschicht vorgesehen sind, welche in Querrichtung bezüglich der Richtung der Vorwärtsbewegung der Schicht an einer Stelle unmittelbar im Anschluß an das Entfernen der Schicht bewegt werden.

## Revendications

1. Procédé de fabrication de produits à alvéoles, en mousse de latex, sous la forme d'une couche continue de longueur illimitée divisible en pièces unitaires de dimensions prédéterminées, ledit procédé comprenant les phases de:
- rotation en continu d'une surface de pose (25), fermée en anneau définie à un moment par une partie plane (9) avançant selon une première direction et une partie de retour (10) déplacée en sens contraire à la première direction, et pose de mousse de latex au début de la partie plane dans un sens transversal à la direction d'avance jusqu'à constituer une couche d'épaisseur prédéterminée (T), ladite surface de pose étant munie d'une pluralité de protubérances;
- moulage dans la couche de mousse posée d'une pluralité d'alvéoles en correspondance avec chaque protubérance, lesdites alvéoles ayant une hauteur prédéterminée inférieure à l'épaisseur totale de la mousse;
- introduction de vapeur sous pression dans un vulcanisateur à tunnel;
- vulcanisation (6) de la mousse en aval du début de la partie plane entre une première et une deuxième position, en fournissant de la chaleur entre lesdites positions avec la vapeur sous pression;
ledit procédé étant caractérisé par les phases supplémentaires suivantes:
a - de rotation de ladite surface de pose (25) ayant des plans de pose munis desdites protubérances, qui sont placés côte à côte dans la partie plane et séparés les uns des autres selon une configuration polygonale entre lesdites parties planes et de retour de sorte que lesdits plans de pose et lesdites protubérances soient insensibles aux contraintes mécaniques pendant la courbe d'enroulement dans ledit anneau;
b - d'introduction de vapeur dans lesdites protubérances qui sont entièrement creuses et qui ont des bases qui sont entièrement ouvertes au niveau d'une surface desdits plans de pose ce qui fait que la vapeur ne dépose pas comme un condensat à l'intérieur des protubérances à la fin de la phase de vulcanisation.

2. Procédé selon la revendication 1, caractérisé par le fait d'araser la mousse posée au poste d'entrée en maintenant à une hauteur prédéterminée de la surface de pose une surface rigide (42) s'étendant transversalement à la couche continue de mousse avançant vers la phase de vulcanisation.

3. Procédé selon la revendication 1 ou 2, caractérisé par le fait de chauffer (17) le milieu s'étendant sur et près de la première position de vulcanisation à une température correspondant à celle pour maintenir un état de vapeur.

4. Procédé selon la revendication 1 ou 2 ou 3, caractérisé par le fait de durcir (43) la surface extérieure de la couche de mousse avançant entre le poste d'entrée et la première position de vulcanisation par application de chaleur au-dessus de ladite couche.

5. Procédé selon la revendication 1, caractérisé par le fait de pulvériser (40) des substances antiadhésives contre la surface de pose le long de ladite partie de retour.

6. Procédé selon la revendication 1, caractérisé par le fait d'employer des forces de découpe transversales à la couche de mousse continue vulcanisée et de maintenir les lignes de découpe adjacentes à une distance mutuelle correspondant à la largeur prédéterminée d'un produit unitaire.

7. Procédé selon la revendication 1, caractérisé par le fait de délimiter la couche de mousse s'avançant entre deux surfaces rigides (33, 34) en face l'une de l'autre et à une distance mutuelle correspondant à la longueur prédéterminée du produit fini.

8. Procédé selon la revendication 7, caractérisé par le fait de changer la valeur de la longueur du produit en déplaçant une desdites surfaces rigides par rapport à l'autre.

9. Procédé selon la revendication 1, caractérisé par le fait d'exercer des forces de traction de valeur constante sur les surfaces opposées de la couche de mousse alvéolée au-dessus de la partie plane de la surface de pose.

10. Appareil (1) de fabrication en continu de produits à alvéoles en mousse de polymères de latex sous la forme d'une couche de longueur illimitée divisible en pièces unitaires de dimensions prédéterminées, ledit appareil comprenant:
- un élément de transport (2) fermé en anneau autour d'au moins deux moyens circulaires (3, 4, 5) tournant autour d'axes parallèles selon une configuration définie par une partie plane (9) et une partie de retour (10) reliées entre elles par des parties curvilignes (11, 12, 13), ledit élément de transport comprenant une surface de support munie de protubérances (26) en saillie vers l'extérieur et formées de façon à correspondre aux alvéoles du produit à fabriquer;
- un vulcanisateur à tunnel (6) à vapeur à haute pression traversé par ladite partie plane entre deux positions d'extrémité;
- un dispositif (7) d'injection de mousse de latex;
- un poste pour l'entrée de la partie plane (9) comprenant une structure (20) qui est suspendue par rapport à l'élément de transport à laquelle sont associés des moyens d'entraînement susceptibles de déplacer ledit dispositif d'injection dans des sens contraires l'un par rapport à l'autre selon la direction transversale, ledit appareil étant caractérisé par le fait que:
a) ladite surface de pose comprend une pluralité de plaques (25), chacune munie desdites protubérances (26) qui sont placées côte à côte dans la partie plane et séparées les unes des autres selon une configuration polygonale entre lesdites parties planes et de retour de sorte que lesdites plaques et lesdites protubérances soient insensibles aux contraintes mécaniques pendant la courbe d'enroulement dans ledit anneau.
b) lesdites protubérances sont entièrement creuses et ont des bases qui sont entièrement ouvertes au niveau d'une surface desdites plaques au niveau de laquelle lesdites protubérances sont reliées auxdites plaques ce qui fait que la vapeur ne peut pas se déposer comme un condensat à l'intérieur des protubérances à la sortie du vulcanisateur à tunnel.

11. Appareil selon la revendication 10, caractérisé par le fait que lesdits moyens de transmission du mouvement comprennent deux chaînes latérales s'engrenant sur des roues d'engrenage (3, 4, 5).

12. Appareil selon la revendication 10, caractérisé par le fait que lesdites plaques et lesdites protubérances sont en aluminium.

13. Appareil selon la revendication 10, caractérisé par le fait d'inclure une lame d'arasement (41) placée à une hauteur prédéterminée des plaques en aval du poste d'entrée.

14. Appareil selon la revendication 10, caractérisé par le fait d'inclure des moyens pour délimiter latéralement la couche continue de mousse.

15. Appareil selon la revendication 14, caractérisé par le fait que lesdits moyens comprennent sur chaque plaque de l'élément de transport des parois rigides (33, 34) en face l'une de l'autre placées perpendiculairement aux surfaces des plaques.

16. Appareil selon la revendication 10, caractérisé par le fait d'inclure une lame (42) placée à une hauteur prédéterminée des plaques à l'aval du poste d'entrée, ladite lame étant munie à son extrémité inférieure d'une série d'ondulations consécutives (43').

17. Appareil selon la revendication 10, caractérisé par le fait d'inclure des moyens de découpe de la couche cellulaire continue déplacés dans le sens transversal par rapport à la direction d'avance de la couche à une position qui suit immédiatement l'enlèvement de la couche.
